# EUROPEAN PATENT APPLICATION

(11) **EP 4 443 669 A1**
(43) Date of publication of application: **09.10.2024**
(21) Application number: 22900327.2
(22) Date of filing: 23.11.2022
(51) Int. Cl.: H01R 13/70, H01R 13/703, H01R 13/639, B60L 53/16

(54) **NEW ENERGY VEHICLE AND ONBOARD CHARGING DEVICE THEREOF, ELECTRONIC LOCK CONTROL CIRCUIT, AND CONTROL METHOD**

(30) Priority: 30.11.2021 CN 202111447028
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Dehns
(86) International application number: PCT/CN2022/133594
(87) International publication number: WO 2023/098522

(57) **Abstract**

An electronic lock control circuit, comprising: a socket lock driving circuit, a seal cover lock driving circuit, a switch tube, and a control unit. An output end of the switch tube is respectively connected to a power supply input end of the socket lock driving circuit and a power supply input end of the seal cover lock driving circuit; when the switch tube is in a switch-on state, the socket lock driving circuit and the seal cover lock driving circuit are powered on, and when the switch tube is in a switch-off state, the socket lock driving circuit and the seal cover lock driving circuit are powered off; and the control unit has a switch control end connected to a control receiving end of the switch tube, and is configured for stopping outputting a switch-on control signal to the switch tube when it is determined that a new energy vehicle is in a non-charging state, such that the switch tube is in the switch-off state. The electronic lock control circuit can reduce the power consumption of a vehicle-mounted charging device of the new energy vehicle in the non-charging state. Further provided are a new energy vehicle and a vehicle-mounted charging device thereof, and a control method.

## Description

### RELATED APPLICATION

The present disclosure claims priority to Chinese Patent Application No. 202111447028.6, entitled "NEW ENERGY VEHICLE AND ONBOARD CHARGING DEVICE THEREOF, ELECTRONIC LOCK CONTROL CIRCUIT, AND CONTROL METHOD" as filed on November 30, 2021, which is hereby incorporated by reference in its entirety.

### TECHNICAL FIELD

The present disclosure relates to the technical field of new energy vehicle onboard charging device, and in particular to a new energy vehicle and an onboard charging device thereof, an electronic lock control circuit, and a control method.

### BACKGROUND

As the charging technology of new energy electric vehicles develops towards high-power DC fast charging, as specifically stipulated in new energy electric vehicle charging standards, an electronic locking mechanism is required to ensure a good connection between a charging head and an onboard charging device, and in turn ensure the reliable and safe charging of new energy electric vehicles. However, in the process of implementing the present disclosure, the inventors of the present disclosure found that the new energy vehicle onboard charging device still has relatively high power consumption in the non-charging state.

### SUMMARY

An object of the embodiments of the present disclosure is to provide a new energy vehicle and an onboard charging device thereof, an electronic lock control circuit, and a control method to reduce the power consumption of the new energy vehicle onboard charging device in a non-charging state.

In order to achieve the above object, on one hand, an embodiment of the present disclosure provides an electronic lock control circuit of a new energy vehicle onboard charging device, including:
a socket lock driving circuit;
a seal cover lock driving circuit;
a switch tube, of which an output end is respectively connected to a power supply input end of the socket lock driving circuit and a power supply input end of the seal cover lock driving circuit, and when the switch tube is in a switch-on state, the socket lock driving circuit and the seal cover lock driving circuit are powered on, and when the switch tube is in a switch-off state, the socket lock driving circuit and the seal cover lock driving circuit are powered off; and
a control unit, of which a switch control end is connected to a control receiving end of the switch tube, and is configured to stop outputting a switch-on control signal to the switch tube when a new energy vehicle is determined to be in a non-charging state, such that the switch tube is in the switch-off state.

In the electronic lock control circuit in the embodiment of the present disclosure, the control unit is also provided with a first drive control end connected to a first driving receiving end of the socket lock driving circuit and a second drive control end connected to a second driving receiving end of the seal cover lock driving circuit; and
the control unit is also configured to output a switch-on control signal to the switch tube when the new energy vehicle is determined to be charged as needed, such that the switch tube is in a switch-on state; and output a driving signal to the socket lock driving circuit and/or the seal cover lock driving circuit.

In the electronic lock control circuit in the embodiment of the present disclosure, the switch tube includes a field effect transistor; a drain electrode of the field effect transistor is connected to a power supply, and a source electrode of the field effect transistor is respectively connected to a power supply input end of the socket lock driving circuit and a power supply input end of the seal cover lock driving circuit, and a gate electrode of the field effect transistor is connected to the switch control end of the control unit by a voltage-dividing circuit.

In the electronic lock control circuit in the embodiment of the present disclosure, the voltage-dividing circuit includes a first voltage-dividing resistor and a second voltage-dividing resistor, one end of the first voltage-dividing resistor is connected to the switch control end of the control unit, the other end of the first voltage-dividing resistor is connected to one end of the second voltage-dividing resistor, the other end of the second voltage-dividing resistor is grounded, and a connection point between the first and second voltage-dividing resistors is connected to the gate electrode of the field effect transistor.

In the electronic lock control circuit in the embodiment of the present disclosure, the electronic lock control circuit further includes:

a first output interface protection circuit provided between an output end of the socket lock driving circuit and a socket lock connection terminal, and configured to discharge an induced electromotive force at the output end of the socket lock driving circuit, and filter out an electrostatic discharge interference of the output end; and

a second output interface protection circuit provided between an output end of the seal cover lock driving circuit and a seal cover lock connection terminal, and configured to discharge an induced electromotive force at the output end of the seal cover lock driving circuit, and filter out an electrostatic discharge interference of the output end.

In the electronic lock control circuit in the embodiment of the present disclosure, the socket lock connection terminal and the seal cover lock connection terminal share an integrated terminal; positive and negative output ends of the socket lock driving circuit correspond to a first terminal and a second terminal of the integrated terminal correspondingly, and positive and negative output ends of the seal cover lock driving circuit are connected to a third terminal and a fourth terminal of the integrated terminal correspondingly.

In the electronic lock control circuit in the embodiment of the present disclosure, the second output interface protection circuit includes: a first capacitor, a second capacitor, a first clamping diode, and a second clamping diode;
one end of the first capacitor is connected to one end of the first clamping diode, the other end of the first capacitor and the other end of the first clamping diode are grounded, and a connection point between the first capacitor and the first clamping diode is connected to the negative output end of the seal cover lock driving circuit; and
one end of the second capacitor is connected to one end of the second clamping diode, the other end of the second capacitor and the other end of the second clamping diode are grounded, and a connection point between the second capacitor and the second clamping diode is connected to the positive output end of the seal cover lock driving circuit.

In the electronic lock control circuit in the embodiment of the present disclosure, the first output interface protection circuit includes: a third capacitor, a fourth capacitor, a third clamping diode, and a fourth clamping diode;
one end of the third capacitor is connected to one end of the third clamping diode, the other end of the third capacitor and the other end of the third clamping diode are grounded, and a connection point between the third capacitor and the third clamping diode is connected to the negative output end of the socket lock driving circuit; and
one end of the fourth capacitor is connected to one end of the fourth clamping diode, the other end of the fourth capacitor and the other end of the fourth clamping diode are grounded, and a connection point between the fourth capacitor and the fourth clamping diode is connected to the positive output end of the socket lock driving circuit.

In the electronic lock control circuit in the embodiment of the present disclosure, the control unit is also provided with a first feedback receiving end connected to a first state feedback end of the socket lock driving circuit and a second feedback receiving end connected to a second state feedback end of the seal cover lock driving circuit; and
the control unit is further configured to perform self-protection determination according to a first self-protection state signal and/or a second self-protection state signal when receiving the first self-protection state signal fed back by the socket lock driving circuit and/or the second self-protection state signal fed back by the seal cover lock driving circuit.

In the electronic lock control circuit in the embodiment of the present disclosure, the electronic lock control circuit further includes:
a first self-protection output filter circuit provided between the first feedback receiving end and the first state feedback end, and configured to perform level filtering on the first self-protection state signal to filter out a false protection signal; and
a second self-protection output filter circuit provided between the second feedback receiving end and the second state feedback end, and configured to perform level filtering on the second self-protection state signal to filter out a false protection signal.

In the electronic lock control circuit in the embodiment of the present disclosure, the first self-protection output filter circuit includes: a first pull-up resistor and a fifth capacitor, one end of the first pull-up resistor is connected to one end of the fifth capacitor, the other end of the first pull-up resistor is connected to a power supply voltage, the other end of the fifth capacitor is grounded, and a connection point between one end of the first pull-up resistor and the fifth capacitor is connected to the first state feedback end.

In the electronic lock control circuit in the embodiment of the present disclosure, the second self-protection output filter circuit includes: a second pull-up resistor and a sixth capacitor, one end of the second pull-up resistor is connected to one end of the sixth capacitor, the other end of the second pull-up resistor is connected to the power supply voltage, the other end of the sixth capacitor is grounded, and a connection point between one end of the second pull-up resistor and the sixth capacitor is connected to the second state feedback end.

On the other hand, an embodiment of the present disclosure also provides a new energy vehicle onboard charging device provided with the electronic lock control circuit.

On the other hand, an embodiment of the present disclosure also provides a new energy vehicle provided with the new energy vehicle onboard charging device.

On the other hand, an embodiment of the present disclosure also provides a method of controlling a new energy vehicle onboard charging device, applied to the new energy vehicle onboard charging device, the control method includes the steps of:
determining whether a new energy vehicle is in a non-charging state; and
stopping outputting a switch-on control signal to a switch tube when the new energy vehicle is in the non-charging state, such that the switch tube is in a switch-off state.

In the control method in the embodiment of the present disclosure, before determining whether a new energy vehicle is in a non-charging state, the method further includes:
determining whether the new energy vehicle needs to be charged; and
outputting a switch-on control signal to the switch tube when the new energy vehicle needs to be charged, such that the switch tube is in a switch-on state.

In the control method in the embodiment of the present disclosure, after outputting a switch-on control signal to the switch tube, the method further includes:
outputting a driving signal to the socket lock driving circuit and/or the seal cover lock driving circuit.

In the control method in the embodiment of the present disclosure, after outputting a switch-on control signal to the switch tube, the method further includes:
performing self-protection determination according to a first self-protection state signal and/or a second self-protection state signal, when receiving the first self-protection state signal fed back by the socket lock driving circuit and/or the second self-protection state signal fed back by the seal cover lock driving circuit.

In the control method in the embodiment of the present disclosure, the performing self-protection determination according to a first self-protection state signal and/or a second self-protection state signal includes:
stopping outputting a switch-on control signal to the switch tube when receiving the first self-protection state signal, and outputting socket lock failure information;
stopping outputting the switch-on control signal to the switch tube when receiving the second self-protection state signal, and outputting seal cover lock failure information; and
stopping outputting the switch-on control signal to the switch tube while receiving the first self-protection state signal and the second self-protection state signal, and outputting the socket lock failure information and the seal cover lock failure information.

On the other hand, an embodiment of the present disclosure also provides a computer device including: a memory, a processor, and a computer program stored on the memory, in which the computer program, when being run by the processor, execute instructions of the control method.

On the other hand, an embodiment of the present disclosure also provides a computer storage medium, on which a computer program is stored, in which the computer program, when being run by a processor of a computer device, executes instructions of the control method is.

As can be seen from the technical solutions provided in the embodiments of the present disclosure, in the embodiments of the present disclosure, when determining that the new energy vehicle is in the non-charging state, the control unit can stop outputting the switch-on control signal to the switch tube, such that the switch tube is in the switch-off state. In this way, the switch tube cuts off the power supply of the socket lock driving circuit and the seal cover lock driving circuit, and the socket lock driving circuit and the seal cover lock driving circuit stop operations, thereby saving the power consumption when the new energy vehicle is in the non-charging state, the control unit still outputs the switch-on control signal to the socket lock driving circuit and the seal cover lock driving circuit, and when the socket lock driving circuit and the seal cover lock driving circuit are still in a standby state, thus reducing the power consumption of the new energy vehicle onboard charging device in the non-charging state.

### BRIEF DESCRIPTION OF THE DRAWINGS

In order to more clearly illustrate the technical solutions in the embodiments of the present disclosure or the prior art, the drawings that need to be used in the description of the embodiments or the prior art are briefly introduced below. Obviously, the drawings in the description below are only some embodiments documented in the present disclosure. A person skilled in the art can also obtain other drawings based on these drawings without any creative effort.
FIG. 1 is a structural block diagram illustrating an electronic lock control circuit of a new energy vehicle onboard charging device in some embodiments of the present disclosure;
FIG. 2 is a structural block diagram illustrating the electronic lock control circuit of the new energy vehicle onboard charging device in other embodiments of the present disclosure;
FIG. 3 is a structural block diagram illustrating the electronic lock control circuit of the new energy vehicle onboard charging device in other embodiments of the present disclosure;
FIG. 4 is a schematic circuit diagram illustrating the electronic lock control circuit of the new energy vehicle onboard charging device in some embodiments of the present disclosure (excluding the output interface protection circuit);
FIG. 5 is a schematic circuit diagram illustrating the output interface protection circuit of the electronic lock control circuit of the new energy vehicle onboard charging device in some embodiments of the present disclosure;
FIG. 6 is a flowchart illustrating a method of controlling a new energy vehicle onboard charging device in some embodiments of the present disclosure; and
FIG. 7 is a structural block diagram illustrating a computer device in some embodiments of the present disclosure.

### [Description of Reference Signs]

10. switch tube;
20. control unit;
30. socket lock driving circuit;
40. seal cover lock driving circuit;
51. first output interface protection circuit;
52. second output interface protection circuit;
61. first self-protection output filter circuit;
62. second self-protection output filter circuit;
70. integrated terminal;
702. computer device;
704. processor;
706. memory;
708. drive mechanism;
710. input/output interface;
712. input device;
714. output device;
716. presentation device;
718. graphical user interface;
720. network interface;
722. communication link; and
724. communication bus.

### BRIEF DESCRIPTION OF THE DRAWINGS

In order for a person skilled in the art to better understand the technical solutions in the present disclosure, the technical solutions in the embodiments of the present disclosure are described below in a clear and complete manner in conjunction with the drawings in the embodiments of the present disclosure. Obviously, the described embodiments are only some but not all of the embodiments in the present disclosure. Based on the embodiments in the present disclosure, all other embodiments obtained by a person skilled in the art without creative efforts shall fall within the protection scope of the present disclosure.

The electronic lock mentioned in the embodiments of the present disclosure generally refers to an electronic lock disposed on a new energy vehicle onboard charging device (i.e., the onboard charging device of the new energy vehicle), which may include a socket lock and/or a seal cover lock, in which the socket lock can lock and secure the charging head on the new energy vehicle onboard charging device when the new energy vehicle is charging, so as to ensure that in the process of charging the new energy vehicle, the charging head can always maintain a good connection with the new energy vehicle onboard charging device. The seal cover lock can be configured to lock and cover the cover plate of the new energy vehicle onboard charging device, in order to protect the new energy vehicle onboard charging device; and when charging the new energy vehicle is required, the seal cover lock is unlocked and the cover plate is opened.

In view of the problem that the existing new energy vehicle onboard charging device still involves relative high power consumption in the non-charging state, the embodiment of the present disclosure provides an improved electronic lock control circuit of the new energy vehicle onboard charging device. In which the non-charging state may include a non-charging state when the charging head is not plugged into the new energy vehicle onboard charging device; and a non-charging state when the new energy vehicle is fully charged and the charging head is not unplugged.

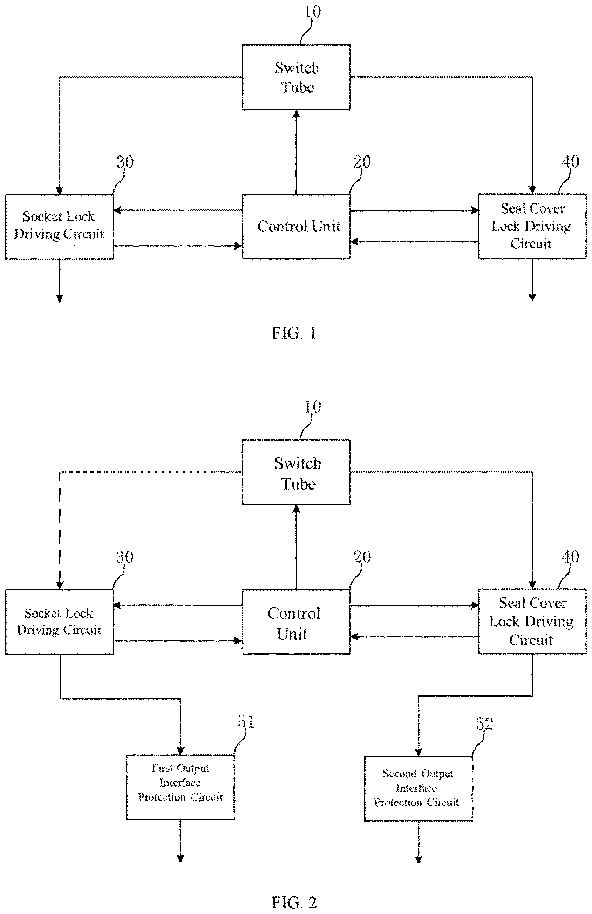

Referring to FIG. 1, in some embodiments, the electronic lock control circuit of the new energy vehicle onboard charging device may include: a switch tube 10, a control unit 20, a socket lock driving circuit 30 and a seal cover lock driving circuit 40.

An output end of the switch tube 10 is respectively connected to a power supply input end of the socket lock driving circuit 30 and a power supply input end of the seal cover lock driving circuit 40, and when the switch tube 10 is in a switch-on state, the socket lock driving circuit 30 and the seal cover lock driving circuit 40 are powered on (i.e., energized), and when the switch tube 10 is in a switch-off state, the socket lock driving circuit 30 and the seal cover lock driving circuit 40 are powered off (i.e., deenergized).

A switch control end of the control unit 20 can be connected to a control receiving end of the switch tube 10, and the control unit 20 is configured to stop outputting a switch-on control signal to the switch tube 10 when a new energy vehicle is determined to be in a non-charging state, such that the switch tube 10 is in the switch-off state. In this way, the switch tube 10 cuts off the power supply of the socket lock driving circuit 30 and the seal cover lock driving circuit 40, and the socket lock driving circuit 30 and the seal cover lock driving circuit 40 cease to be in a standby state, thereby saving the power consumption generated by that the control unit 20 still outputs the switch-on control signal to the socket lock driving circuit 30 and the seal cover lock driving circuit 40, and the socket lock driving circuit 30 and the seal cover lock driving circuit 40 are still in the standby state when the new energy vehicle is in the non-charging state, thus reducing the power consumption of the new energy vehicle onboard charging device in the non-charging state. Moreover, the method of reducing static power consumption can also extend the service life of the electronic lock control circuit. Since the driving circuits (i.e., the socket lock driving circuit 30 and the seal cover lock driving circuit 40) are not kept powered all the time, the external radiation of the driving circuits may also be reduced, which in turn can help reduce the total radiation of the new energy vehicle.

In some embodiments, the control unit 20 can determine whether the new energy vehicle is in the non-charging state by detecting the charging state of the new energy vehicle. For example, when the new energy vehicle is detected to be currently in the full charging state, the new energy vehicle can be determined to be in the non-charging state. In other embodiments, the control unit 20 can also determine whether the new energy vehicle is in the non-charging state by detecting the state of the socket lock and/or the seal cover lock. For example, taking the socket lock as an example, when the socket lock is detected to be in an unlocked state, it indicates that no charging head is currently plugged into the new energy vehicle onboard charging device, thus the new energy vehicle can be determined to be in the non-charging state. For another example, taking the seal cover lock as an example, when the seal cover lock is detected to be in a locked state, it indicates that the current new energy vehicle onboard charging device is covered by the cover plate, and no charging head is plugged into the new energy vehicle onboard charging device. Correspondingly, the energy vehicle can also be determined to be in the non-charging state. Of course, in other embodiments, detecting the states of the socket lock and detecting the seal cover lock may also be comprehensively utilized to determine whether the new energy vehicle is in the non-charging state, in order to improve the accuracy of determination.

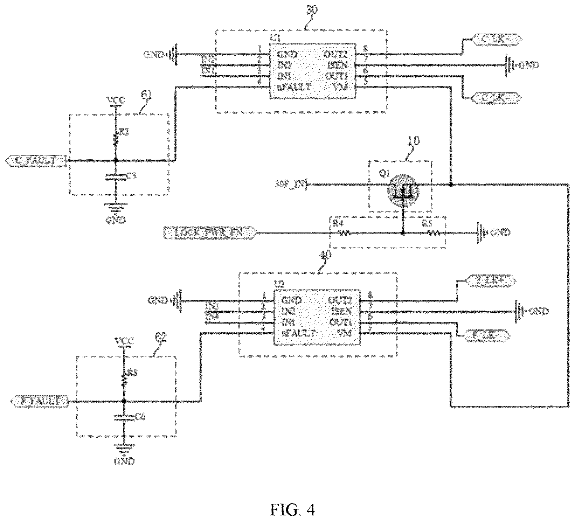

The socket lock and the seal cover lock generally use a motor (i.e., electric motor) to perform locking and unlocking actions. Therefore, both the socket lock and the seal cover lock need to be provided with respective motor driving circuits to drive a socket lock motor and a seal cover lock motor correspondingly, to perform the locking and unlocking actions. Hence, the motor driving circuit of the socket lock can be called the socket lock driving circuit 30, and the motor driving circuit of the seal cover lock can be called the seal cover lock driving circuit 40. In some embodiments, the socket lock driving circuit 30 and the seal cover lock driving circuit 40 can be an integrated motor driving module (such as a motor driving chip and the like). For example, in the embodiment as illustrated in FIG. 4, the socket lock driving circuit 30 may use a motor drive chip U1, and the seal cover lock driving circuit 40 may use a motor drive chip U2. Since the embodiments of the present disclosure do not relate to improvements of the portions of socket lock driving circuit 30 and the seal cover lock driving circuit 40, details are not described here.

The switch tube 10 refers to a controllable semiconductor device with a small internal resistance such as a triode and the like. This voltage drop of this portion can be controlled within a small range by using the switch tube 10 with a small internal resistance as an electronic switch, so as not to affect the power supply voltage of the back-end driving circuit, and static power consumption requirements of the new energy vehicle can also be met when the new energy vehicle is not charging. In some embodiments, the triode may be a bipolar junction transistor (BJT), a junction field-effect transistor (JFET), a metal oxide semi-conductor field effect transistor (MOS FET) or a V-groove metal-oxide semiconductor (VMOS), which may be specifically selected according to needs of actual application scenarios.

For example, in the embodiment as illustrated in FIG. 4, the switch tube 10 may be an N-channel enhanced MOS field effect transistor (hereinafter referred to as MOS transistor) Q1. A drain electrode of the MOS transistor Q1 (30F_IN end in FIG. 4) is connected to the power supply, a source electrode of the MOS transistor Q1 is connected to the power supply input end of the socket lock driving circuit 30 and the power supply input end of the seal cover lock driving circuit 40, respectively, and a gate electrode of the MOS transistor Q1 is connected to a switch control end (LOCK_PWR_EN terminal in FIG. 4) of the control unit by a voltage-dividing circuit.

As illustrated in FIG. 4, in some embodiments, the voltage-dividing circuit may include: a first voltage-dividing resistor R4 and a second voltage-dividing resistor R5, one end of the first voltage-dividing resistor R4 is connected to the switch control end of the control unit, the other end of the first voltage-dividing resistor R4 is connected to one end of the second voltage-dividing resistor R5, the other end of the second voltage-dividing resistor R5 is grounded, a connection point between the first voltage-dividing resistor R4 and the second voltage-dividing resistors R5 is connected to the gate electrode of the MOS transistor Q1. In this way, the voltage-dividing circuit consisting of the first voltage-dividing resistor R4 and the second voltage-dividing resistor R5 can provide a DC voltage to the drain electrode of the MOS transistor Q1, that is, establish a DC bias voltage of the drain electrode of the MOS transistor Q1, thus the voltage-dividing circuit can also be called a voltage-dividing DC bias circuit.

The control unit 20 is a control and processing center of the entire new energy vehicle onboard charging device. In some embodiments, the control unit 20 may include, but not limited to, a single chip microcomputer, a microcontroller unit (MCU), a microprocessor unit (MPU), a digital signal processing (DSP), a programmable logic controller (PLC)and the like.

As illustrated in FIG. 2, in some other embodiments, the control unit 20 is also provided with a first drive control end connected to a first driving receiving end of the socket lock driving circuit 30 and a second drive control end connected to a second driving receiving end of the seal cover lock driving circuit 40. Correspondingly, the control unit 20 can also be configured to output a switch-on control signal to the switch tube 10 when a new energy vehicle is determined to be charged as needed, such that the switch tube 10 is in a switch-on state; and output a driving signal to the socket lock driving circuit 30 and/or the seal cover lock driving circuit 40, such that the socket lock driving circuit 30 and the seal cover lock driving circuit 40 drive the socket lock motor and the seal cover lock motor correspondingly, and thus realize locking and unlocking.

Outputting, by the control unit 20, a driving signal to the socket lock driving circuit 30 and/or the seal cover lock driving circuit 40 indicates: the control unit 20 can selectively output a driving signal to the socket lock driving circuit 30 and/or the seal cover lock driving circuit 40 according to different control logics. For example, when only the seal cover of the new energy vehicle onboard charging device needs to be opened, the control unit 20 can only output a driving signal to the cover lock driving circuit 40, and stop outputting the driving signal to the seal cover lock driving circuit 40 when determining that the seal cover of the new energy vehicle onboard charging device has been opened; In the case where the seal cover of the new energy vehicle onboard charging device has been opened, when a charging head is plugged into the new energy vehicle onboard charging device, the control unit 20 can only output the driving signal to the socket lock driving circuit 30 to lock the charging head on the new energy vehicle onboard charging device, and stop outputting a driving signal to the socket lock driving circuit 30, when it is determined that the charging head has been locked on the new energy vehicle onboard charging device, etc.

In some embodiments, the control unit 20 may determine that charging the new energy vehicle is required when receiving a charging instruction. For example, when the charging head is detected to be plugged into the new energy vehicle onboard charging device, it is equivalent to receiving a charging instruction. Of course, this is only an illustrative example. In other embodiments, any state or event that enables the control unit 20 to recognize that a user wants to charge the new energy vehicle can be regarded as the control unit 20 receiving a charging instruction. Therefore, the present specification does not make a unique limitation thereto.

In some embodiments, the control unit 20 is also provided with a first feedback receiving end and a second feedback receiving end, the first feedback receiving end is connected to a first state feedback end of the socket lock driving circuit 30, and the second feedback receiving end is connected to a second state feedback end of the seal cover lock driving circuit 40. Therefore, the control unit 20 can also be configured to perform self-protection determination according to a first self-protection state signal and/or a second self-protection state signal when receiving the first self-protection state signal fed back by the socket lock driving circuit 30 and/or the second self-protection state signal fed back by the seal cover lock driving circuit 40.

In some embodiments, the performing self-protection determination according to a first self-protection state signal and/or a second self-protection state signal may include: stopping outputting a driving signal to the socket lock driving circuit 30, when receiving the first self-protection state signal; stopping outputting the driving signal to the seal cover lock driving circuit 40, when receiving the second self-protection state signal; stopping outputting the driving signal to the socket lock driving circuit 30 and the seal cover lock driving circuit 40, or stopping outputting the switch-on control signal to the switch tube 10, when receiving the first self-protection state signal and the second self-protection state signal.

Please continue to refer to FIG. 1 or FIG. 2, in some embodiments, the socket lock driving circuit 30 and the seal cover lock driving circuit 40 can be selected as an integrated chip with internal integrated functions such as driving + H-bridge circuit, real-time current feedback, self-protection state signal output and the like, in which self-protection may include, but not limited to, overvoltage and undervoltage protection, over-current protection, over-temperature protection and the like. For example, taking the embodiment as illustrated in FIG. 4 as an example, the pin function of the motor drive chip U1 and the motor drive chip U2 are as follows: GND is a reference ground terminal; IN2/IN3 configured as the drive receiving end is connected to the drive control end of the control unit 20; nFAULT used as a state feedback end is connected to the feedback receiving end of the control unit 20 to feed back the self-protection state signal to the control unit 20; VM as a power supply input end is connected to the source electrode of the MOS transistor Q1; OUT1 and OUT2 are used as drive output ends to control the positive and negative outputs and the output direction through a combination of high and low levels, in order to achieve the object of driving control of locking and unlocking; ISEN as a current detection resistor terminal can be used to detect the locking state (such as whether the locking is successful, whether the unlocking is successful, etc.). If such function is not required, the current detection resistor terminal can be grounded.

When the socket lock driving circuit 30 or the seal cover lock driving circuit 40 itself detects abnormalities such as undervoltage, over-current and/or over-temperature, a self-protection state signal can be output to the control unit 20 via its own state feedback end. However, in some cases, the state feedback ends of the socket lock driving circuit 30 and the seal cover lock driving circuit 40 may accidentally output a self-protection state signal (i.e., output a false protection signal) due to an external interference, thus causing the control unit 20 to mistakenly consider that a failure occurs in the socket lock driving circuit 30 or the seal cover lock driving circuit 40, and hence the drive or power supply is stopped, which may affect the charging process.

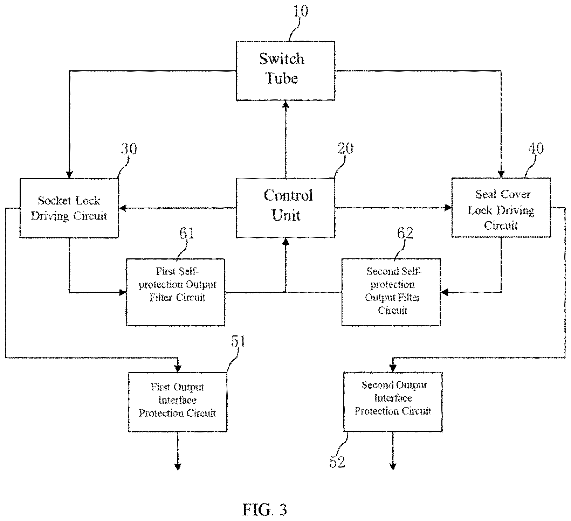

Therefore, referring to FIG. 3, in some other embodiments, the electronic lock control circuit of the new energy vehicle onboard charging device may further include: a first self-protection output filter circuit 61 and a second self-protection output filter circuit 62, in which the first self-protection output filter circuit 61 can be provided between the first feedback receiving end and the first state feedback end, and configured to perform level filtering on the first self-protection state signal to filter out a false protection signal of the socket lock driving circuit 30; and the second self-protection output filter circuit 62 can be provided between the second feedback receiving end and the second state feedback end, and configured to perform level filtering on the second self-protection state signal to filter out a false protection signal of the seal cover lock driving circuit 40.

Combined with FIG. 4 shows, in other embodiments, the first self-protection output filter circuit 61 may include: a first pull-up resistor R3 and a fifth capacitor C3, one end of the first pull-up resistor R3 is connected to one end of the fifth capacitor C3, the other end of the first pull-up resistor R3 is connected to a power supply voltage, the other end of the fifth capacitor C3 is grounded, and a connection point between one end of the first pull-up resistor R3 and the fifth capacitor C3 is connected to the first state feedback end. The second self-protection output filter circuit 62 may include: a second pull-up resistor R8 and a sixth capacitor C6, one end of the second pull-up resistor R8 is connected to one end of the sixth capacitor C6, and the other end of the pull-up resistor R8 is connected to the power supply voltage, the other end of the sixth capacitor C6 is grounded, and a connection point between one end of the second pull-up resistor R8 and the sixth capacitor C6 is connected to the second state feedback end.

Combined with FIG. 2 shows, in other embodiments, the electronic lock control circuit of the new energy vehicle onboard charging device may further include: a first output interface protection circuit 51 and a second output interface protection circuit 52, in which the first output interface protection circuit 51 can be provided between an output end of the socket lock driving circuit 30 and a socket lock connection terminal, and configured to discharge an induced electromotive force at the output end of the socket lock driving circuit 30 and filter out an electrostatic discharge interference of the output end; and the second output interface protection circuit 52 can be provided between an output end of the seal cover lock driving circuit 40 and a seal cover lock connection terminal, and configured to discharge an induced electromotive force at the output end of the seal cover lock driving circuit 40, and filter out an electrostatic discharge interference of the output end.

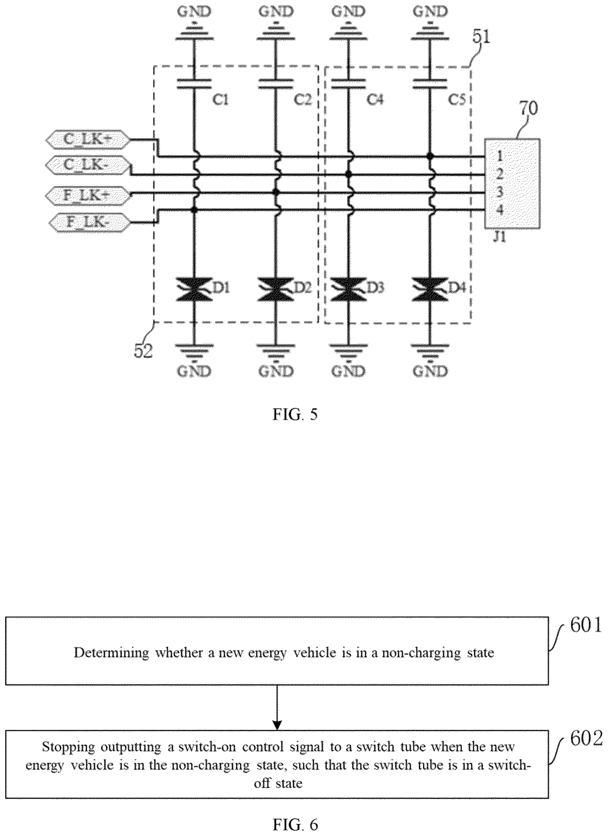

Combined with FIG. 5 shows, in some embodiments, the second output interface protection circuit 52 may include: a first capacitor C1, a second capacitor C2, a first clamping diode D1 and a second clamping diode D2. One end of the first capacitor C1 is connected to one end of the first clamping diode D1, the other end of the first capacitor C1 and the other end of the first clamping diode D1 are grounded, and a connection point between the first capacitor C1 and the first clamping diode D1 is connected to the negative output end (i.e., F_LK- in FIG. 5) of the seal cover lock driving circuit 40. One end of the second capacitor C2 is connected to one end of the second clamping diode D2, the other end of the second capacitor C2 and the other end of the second clamping diode D2 are grounded, and a connection point between the second capacitor C2 and the second clamping diode D2 is connected to the positive output end (i.e., F_LK+ in FIG. 5) of the seal cover lock driving circuit 40.

Please continue to refer to FIG. 5, in some embodiments, the first output interface protection circuit 51 may include: a third capacitor C4, a fourth capacitor C5, a third clamping diode D3, and a fourth clamping diode D4. One end of the third capacitor C4 is connected to one end of the third clamping diode D3, the other end of the third capacitor C4 and the other end of the third clamping diode D3 are grounded, and a connection point between the third capacitor C4 and the third clamping diode D3 is connected to the negative output end (i.e., C_LK- in FIG. 5) of the socket lock driving circuit 30. One end of the fourth capacitor C5 is connected to one end of the fourth clamping diode D4, the other end of the fourth capacitor C5 and the other end of the fourth clamping diode D4 are grounded, and a connection point between the fourth capacitor C5 and the fourth clamping diode D4 is connected to the positive output end (i.e., C_LK+ in FIG. 5) of the socket lock driving circuit 30.

Wherein the first clamping diode D1, the second clamping diode D2, the third clamping diode D3 and the fourth clamping diode D4 may be TVS (Transient Voltage Suppressor, transient diode) clamping diodes. In this way, the electrostatic discharge interference at the interface (i.e., the interface at the output end of the driving circuit) can be suppressed, and the timely discharge of the induced electromotive force of the electronic lock coil can be assisted in to protect a pre-stage driving circuit by providing the first clamping diode D1, the second clamping diode D2, the third clamping diode D3 and the fourth clamping diode D4; and incoming high-frequency interference at the interface can also be suppressed by providing four filter capacitors such as the first capacitor C1, the second capacitor C2, the third capacitor C4 and the fourth capacitor C5. The electrostatic discharge interference refers to an external electrostatic interference during lock installation, circuit board assembly, or operation under complex conditions. The induced electromotive force refers to a conduction interference and a radiation interference of the induced electromotive force introduced by the lock itself. The induced electromotive force can be introduced into the circuit through the lock terminal, so that the circuit may be damaged. By the clamping diodes, a voltage/current with an excessive induced electromotive force may be introduce to GND without damaging internal components of the circuit.

Please continue to combined with FIG. 5 shows, in some embodiments, the socket lock connection terminal and the seal cover lock connection terminal can share an integrated terminal 70 to simplify the structure; positive and negative output ends (i.e., C_LK+, C_LK- in FIG. 5) of the socket lock driving circuit 30 are connected to a first terminal and a second terminal of the integrated terminal 70 correspondingly, and positive and negative output ends (i.e., F_LK+, F_LK- in FIG. 5) of the seal cover lock driving circuit 40 are connected to a third terminal and a fourth terminal of the integrated terminal 70 correspondingly.

For the sake of description, functions are divided into units and described separately when the device above is described. Of course, the functions of units can be realized in one or more pieces of software and/or hardware in the implementation of the present disclosure.

In correspondence to the electronic lock control circuit of the new energy vehicle onboard charging device, an embodiment of the present disclosure also provides a new energy vehicle onboard charging device provided with the electronic lock control circuit.

In correspondence to the new energy vehicle onboard charging device, an embodiment of the present disclosure also provides a new energy vehicle provided with the new energy vehicle onboard charging device.

In correspondence to the new energy vehicle onboard charging device, an embodiment of the present disclosure also provides a method of controlling a new energy vehicle onboard charging device, which can be applied to the new energy vehicle onboard charging device. Referring to FIG. 6, in some embodiments, the control method includes the steps of:

S601, determining whether a new energy vehicle is in a non-charging state; and
S602, stopping outputting a switch-on control signal to a switch tube when the new energy vehicle is in the non-charging state, such that the switch tube is in a switch-off state.

In the control method of some embodiments, before determining whether a new energy vehicle is in a non-charging state, the control method may further include:
determining whether the new energy vehicle needs to be charged; and
outputting a switch-on control signal to the switch tube when the new energy vehicle needs to be charged, such that the switch tube is in a switch-on state.

In the control method of some embodiments, after outputting a switch-on control signal to the switch tube, the control method may further include:
outputting a driving signal to the socket lock driving circuit and/or the seal cover lock driving circuit.

In the control method of some embodiments, after outputting a switch-on control signal to the switch tube, the control method may further include:
performing self-protection determination according to a first self-protection state signal and/or a second self-protection state signal, when receiving the first self-protection state signal fed back by the socket lock driving circuit and/or the second self-protection state signal fed back by the seal cover lock driving circuit.

In the control method of some embodiments, the performing self-protection determination according to a first self-protection state signal and/or a second self-protection state signal may include:
stopping outputting a switch-on control signal to the switch tube when receiving the first self-protection state signal, and outputting socket lock failure information;
stopping outputting the switch-on control signal to the switch tube when receiving the second self-protection state signal, and outputting cover lock failure information;
stopping outputting the switch-on control signal to the switch tube while receiving the first self-protection state signal and the second self-protection state signal, and outputting the socket lock failure information and the seal cover lock failure information.

Although the process flows described above include a plurality of operations occurring in a particular order, it should be clearly understood that these processes may include more or fewer operations, which may be executed sequentially or in parallel (e.g., configuring a parallel processor or a multi-threaded environment).

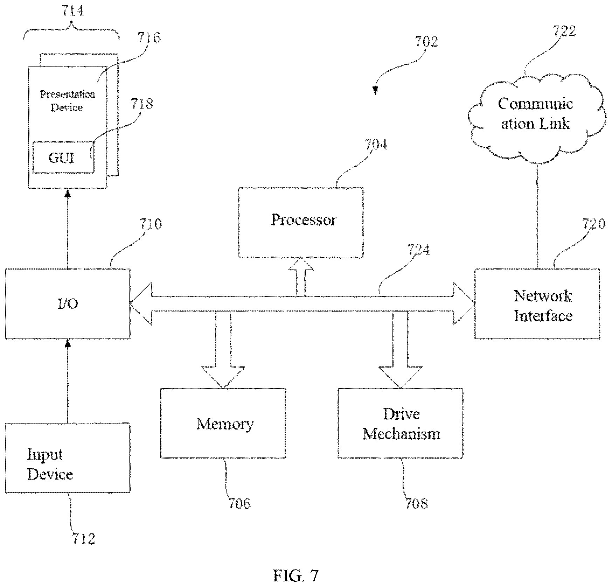

An embodiment of the present disclosure also provides a computer device. As illustrated in FIG. 7, in some embodiments of the present disclosure, the computer device 702 may include one or more processors 704, such as one or more central processing units (CPUs) or graphics processing units (GPUs), where each processing unit may implement one or more hardware threads. The computer device 702 may also include any memory 706 configured to store any type of information such as codes, settings, data and the like. In one specific embodiment, a computer program on the memory 706 and executable on the processor 704 may execute instructions of the method of controlling the new energy vehicle onboard charging device in any of the embodiments, when the computer program is run by the processor 704. For example, the memory 706 may include any one or a combination of: any type of RAM, any type of ROM, a flash device, a hard disk, a CD-ROM and the like, without limitation. More generally, any memory can use any technology to store information. Further, any memory may provide volatile or non-volatile retention of information. Furthermore, any memory may represent a fixed or removable component of the computer device 702. In one case, when the processor 704 executes an associated instruction stored in any memory or a combination of memories, the computer device 702 may perform any operation of the associated instruction. The computer device 702 also includes one or more drive mechanisms 708 configured to interact with any memory, such as a hard disk drive mechanism, an optical disk drive mechanism and the like.

The computer device 702 may also include an input/output interface 710 (I/O) configured to receive various inputs (via an input device 712) and provide various outputs (via an output device 714). A specific output mechanism may include: a presentation device 716 and an associated graphical user interface 718 (GUI). In other embodiments, the input/output interface 710 (I/O), the input device 712 and the output device 714 may not be included, and the computer device 702 is only configured as a computer device in the network. The computer device 702 may also include one or more network interfaces 720 configured to exchange data with other devices via one or more communication links 722. One or more communication buses 724 couple the members mentioned above together.

The communication links 722 may be implemented in any manner, e.g., through a local area network, a wide area network (e.g., the Internet), a peer-to-peer connection, or any combination thereof. The communication links 722 may include any combination of a hardwired link, a wireless link, a router, a gateway function, a name server governed and the like by any protocol or combination of protocols.

The present disclosure is described with reference to flowcharts and/or block diagrams of method, apparatus (system), and computer program product in some embodiments of the present disclosure. It should be understood that each flow and/or block in the flowcharts and/or block diagrams, and a combination of flows and/or blocks in the flowcharts and/or block diagrams can be realized by a computer program instruction. These computer program instructions may be provided to a processor of a general-purpose computer, a special-purpose computer, an embedded processor, or other programmable data processor to produce a machine such that the instructions executed by the processor of the computer or the other programmable data processor produce an apparatus configured to realize the functions specified in one or more flows of the flowcharts and/or one or more blocks of the block diagrams.

These computer program instructions may also be stored in a computer-readable memory capable of directing a computer or other programmable data processor to operate in a specific manner, such that the instructions stored in the computer-readable memory produce an article of manufacture including an instruction device that realizes the functions specified in one or more flows of the flowcharts and/or one or more blocks of the block diagrams.

These computer program instructions may also be loaded onto a computer or other programmable data processor, so that a series of operational steps can be performed on the computer or other programmable device to realize computer-implemented processing, thus the instructions executed on the computer or other programmable device provide steps for realizing the functions specified in one or more flows of the flowcharts and/or one or more blocks of the block diagrams.

In a typical configuration, a computer device includes one or more processors (CPUs), an input/output interface, a network interface and a memory.

The memory may include: a non-permanent memory, a random access memory (RAM) and/or a nonvolatile memory in a computer readable medium, such as a read-only memory (ROM) or a flash RAM. The memory is an example of the computer readable media.

The computer-readable media, including permanent and non-permanent, removable and non-removable media, can be implemented by any method or technology for storage of information. Information may be a computer readable instruction, a data structure, a module of a program, or other data. Examples of computer storage media include, but not limited to, a phase-change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical memory, a magnetic tape, a disk storage or other magnetic storage device or any other non-transmission medium, which can be configured to store information that can be accessed by a computer device. As delimited in the present disclosure, the computer-readable media do not include transitory computer-readable media, such as modulated data signals and carriers.

A person skilled in the art should understand that the embodiments of the present disclosure may be provided as a method, a system or a computer program product. Correspondingly, the embodiments of the present disclosure may take the form of a hardware embodiment alone, a software embodiment alone or an embodiment combining software with hardware. Further, the embodiments of the present disclosure may take the form of a computer program product implemented on one or more computer-usable storage media (including, but not limited to, a disk memory, a CD-ROM, an optical memory) including a computer-usable program code therein.

The embodiments of the present disclosure may be described in the general context of a computer-executable instruction executed by a computer, such as a program module. Generally, program modules include routines, procedures, objects, components, data structures that perform particular tasks or implement particular abstract data types. The embodiments of the present disclosure may also be practiced in distributed computing environments in which tasks are performed by a remote processor linked through a communications network. In the distributed computing environments, program modules may be located in local and remote computer storage media including a storage device.

It should also be understood that in the embodiments of the present disclosure, the term "and/or" merely refers to an association relationship describing associated objects, and indicates that there may exist three relationships. For example, A and/or B may indicate such three cases that A exists alone, both A and B exist, and B exists alone. In addition, the character "/" herein generally indicates that the associated objects have an "or" relationship.

The embodiments of the present disclosure are described in a progressive manner, the same and similar parts of the embodiments can be referred to each other, and each embodiment focuses on differences from the other embodiments. Especially, as to the embodiment of the new energy vehicle, the embodiment of the new energy vehicle onboard charging device, and the embodiment of the method of controlling the new energy vehicle onboard charging device, the description is simple, since the core improvement is essentially similar to the embodiment of the electronic lock control circuit of the new energy vehicle onboard charging device. For the relevant content, please refer to part of the description of the embodiment of the electronic lock control circuit of the new energy vehicle onboard charging device.

In the description of the present disclosure, the description of reference terms such as "one embodiment", "some embodiments", "example", "specific examples", or "some examples" means that specific features, structures, materials, or features described in conjunction with the embodiment or example are included in at least one embodiment or example of the embodiments of the present disclosure. In the present disclosure, schematic representations of the terms are not necessarily targeted at the same embodiment or example. Further, the described specific features, structures, materials or features may be combined in any suitable manner in any one or more embodiments or examples. In addition, a person skilled in the art can combine or assemble different embodiments or examples and features of different embodiments or examples described in the present disclosure without contradicting each other.

Those described above are only the embodiments of the present disclosure, and are not intended to limit the present disclosure. A person skilled in the art may make various amendments and changes to the present disclosure. Any amendment, equivalent substitution, improvement made within the spirit and principle of the present disclosure should fall within the scope of the claims of the present disclosure.

## Claims

1. An electronic lock control circuit of a new energy vehicle onboard charging device, comprising:
a socket lock driving circuit;
a seal cover lock driving circuit;
a switch tube, of which an output end is respectively connected to a power supply input end of the socket lock driving circuit and a power supply input end of the seal cover lock driving circuit, and when the switch tube is in a switch-on state, the socket lock driving circuit and the seal cover lock driving circuit are powered on, and when the switch tube is in a switch-off state, the socket lock driving circuit and the seal cover lock driving circuit are powered off; and
a control unit, of which a switch control end is connected to a control receiving end of the switch tube, and is configured to stop outputting a switch-on control signal to the switch tube when a new energy vehicle is determined to be in a non-charging state, such that the switch tube is in the switch-off state.

2. The electronic lock control circuit as claimed in claim 1, wherein the control unit is also provided with a first drive control end connected to a first driving receiving end of the socket lock driving circuit and a second drive control end connected to a second driving receiving end of the seal cover lock driving circuit; and
the control unit is also configured to output a switch-on control signal to the switch tube when the new energy vehicle is determined to be charged as needed, such that the switch tube is in a switch-on state; and output a driving signal to the socket lock driving circuit and/or the seal cover lock driving circuit.

3. The electronic lock control circuit as claimed in claim 1, wherein the switch tube comprises a field effect transistor; a drain electrode of the field effect transistor is connected to a power supply, and a source electrode of the field effect transistor is respectively connected to a power supply input end of the socket lock driving circuit and a power supply input end of the seal cover lock driving circuit, and a gate electrode of the field effect transistor is connected to the switch control end of the control unit by a voltage-dividing circuit.

4. The electronic lock control circuit as claimed in claim 3, wherein the voltage-dividing circuit comprises a first voltage-dividing resistor and a second voltage-dividing resistor, one end of the first voltage-dividing resistor is connected to the switch control end of the control unit, the other end of the first voltage-dividing resistor is connected to one end of the second voltage-dividing resistor, the other end of the second voltage-dividing resistor is grounded, and a connection point between the first and second voltage-dividing resistors is connected to the gate electrode of the field effect transistor.

5. The electronic lock control circuit as claimed in claim 1, wherein the electronic lock control circuit further comprises:
a first output interface protection circuit provided between an output end of the socket lock driving circuit and a socket lock connection terminal, and configured to discharge an induced electromotive force at the output end of the socket lock driving circuit, and filter out an electrostatic discharge interference of the output end; and
a second output interface protection circuit provided between an output end of the seal cover lock driving circuit and a seal cover lock connection terminal, and configured to discharge an induced electromotive force at the output end of the seal cover lock driving circuit, and filter out an electrostatic discharge interference of the output end.

6. The electronic lock control circuit as claimed in claim 5, wherein the socket lock connection terminal and the seal cover lock connection terminal share an integrated terminal; positive and negative output ends of the socket lock driving circuit are connected to a first terminal and a second terminal of the integrated terminal correspondingly, and positive and negative output ends of the seal cover lock driving circuit are connected to a third terminal and a fourth terminal of the integrated terminal correspondingly.

7. The electronic lock control circuit as claimed in claim 6, wherein the second output interface protection circuit comprises: a first capacitor, a second capacitor, a first clamping diode, and a second clamping diode;
one end of the first capacitor is connected to one end of the first clamping diode, the other end of the first capacitor and the other end of the first clamping diode are grounded, and a connection point between the first capacitor and the first clamping diode is connected to the negative output end of the seal cover lock driving circuit; and
one end of the second capacitor is connected to one end of the second clamping diode, the other end of the second capacitor and the other end of the second clamping diode are grounded, and a connection point between the second capacitor and the second clamping diode is connected to the positive output end of the seal cover lock driving circuit.

8. The electronic lock control circuit as claimed in claim 6, wherein the first output interface protection circuit comprises: a third capacitor, a fourth capacitor, a third clamping diode, and a fourth clamping diode;
one end of the third capacitor is connected to one end of the third clamping diode, the other end of the third capacitor and the other end of the third clamping diode are grounded, and a connection point between the third capacitor and the third clamping diode is connected to the negative output end of the socket lock driving circuit; and
one end of the fourth capacitor is connected to one end of the fourth clamping diode, the other end of the fourth capacitor and the other end of the fourth clamping diode are grounded, and a connection point between the fourth capacitor and the fourth clamping diode is connected to the positive output end of the socket lock driving circuit.

9. The electronic lock control circuit as claimed in claim 1, wherein the control unit is also provided with a first feedback receiving end connected to a first state feedback end of the socket lock driving circuit and a second feedback receiving end connected to a second state feedback end of the seal cover lock driving circuit; and
the control unit is further configured to perform self-protection determination according to a first self-protection state signal and/or a second self-protection state signal when receiving the first self-protection state signal fed back by the socket lock driving circuit and/or the second self-protection state signal fed back by the seal cover lock driving circuit.

10. The electronic lock control circuit as claimed in claim 9, wherein the electronic lock control circuit further comprises:
a first self-protection output filter circuit provided between the first feedback receiving end and the first state feedback end, and configured to perform level filtering on the first self-protection state signal to filter out a false protection signal; and
a second self-protection output filter circuit provided between the second feedback receiving end and the second state feedback end, and configured to perform level filtering on the second self-protection state signal to filter out a false protection signal.

11. The electronic lock control circuit as claimed in claim 10, wherein the first self-protection output filter circuit comprises: a first pull-up resistor and a fifth capacitor, one end of the first pull-up resistor is connected to one end of the fifth capacitor, the other end of the first pull-up resistor is connected to a power supply voltage, the other end of the fifth capacitor is grounded, and a connection point between one end of the first pull-up resistor and the fifth capacitor is connected to the first state feedback end.

12. The electronic lock control circuit as claimed in claim 10, wherein the second self-protection output filter circuit comprises: a second pull-up resistor and a sixth capacitor, one end of the second pull-up resistor is connected to one end of the sixth capacitor, the other end of the second pull-up resistor is connected to the power supply voltage, the other end of the sixth capacitor is grounded, and a connection point between one end of the second pull-up resistor and the sixth capacitor is connected to the second state feedback end.

13. Anew energy vehicle onboard charging device provided with the electronic lock control circuit according to any one of claims 1-12.

14. A new energy vehicle provided with the new energy vehicle onboard charging device as claimed in claim 13.

15. A method of controlling a new energy vehicle onboard charging device applied to the new energy vehicle onboard charging device as claimed in claim 13, comprising the steps of:
determining whether a new energy vehicle is in a non-charging state; and
stopping outputting a switch-on control signal to a switch tube when the new energy vehicle is in the non-charging state, such that the switch tube is in a switch-off state.

16. The control method as claimed in claim 15, wherein before determining whether a new energy vehicle is in a non-charging state, the method further comprises:
determining whether the new energy vehicle needs to be charged; and
outputting a switch-on control signal to the switch tube when the new energy vehicle needs to be charged, such that the switch tube is in a switch-on state.

17. The control method as claimed in claim 16, wherein after outputting a switch-on control signal to the switch tube, the method further comprises:
outputting a driving signal to the socket lock driving circuit and/or the seal cover lock driving circuit.

18. The control method as claimed in claim 16, wherein after outputting a switch-on control signal to the switch tube, the method further comprises:
performing self-protection determination according to a first self-protection state signal and/or a second self-protection state signal, when receiving the first self-protection state signal fed back by the socket lock driving circuit and/or the second self-protection state signal fed back by the seal cover lock driving circuit.

19. The control method as claimed in claim 18, wherein the performing self-protection determination according to a first self-protection state signal and/or a second self-protection state signal comprises:
stopping outputting a switch-on control signal to the switch tube when receiving the first self-protection state signal, and outputting socket lock failure information;
stopping outputting the switch-on control signal to the switch tube when receiving the second self-protection state signal, and outputting seal cover lock failure information; and
stopping outputting the switch-on control signal to the switch tube while receiving the first self-protection state signal and the second self-protection state signal, and outputting the socket lock failure information and the seal cover lock failure information.

20. A computer device comprising: a memory, a processor, and a computer program stored on the memory, wherein the computer program, when being run by the processor, executes instructions of the method according to any one of claims 15-19.

21. A computer storage medium, on which a computer program is stored, wherein the computer program, when being run by a processor of a computer device, executes instructions of the method according to any one of claims 15-19.
